# EUROPÄISCHE PATENTSCHRIFT

(11) **EP 2 042 364 B1**
(45) Veröffentlichungstag und Bekanntmachung des Hinweises auf die Patenterteilung: **19.10.2011**
(21) Anmeldenummer: 08019097.8
(22) Anmeldetag: 13.12.2004
(51) Int. Cl.: F16D 3/223, B60K 17/22, F16D 3/224

(54) **Teleskopierbares Antriebsgelenk**
Telescopic drive joint
Joint de transmission articulé télescopique

(30) Priorität: 11.12.2003 DE 10357858; 08.12.2004 DE 102004059170
(43) Veröffentlichungstag der Anmeldung: 01.04.2009
(62) Teilanmeldung aus: 04803821.0
(73) Patentinhaber: Shaft-Form-Engineering GmbH, 77756 Hausach (DE)
(72) Erfinder: Lutz, Mathias, Dr., 72070 Tübingen (DE); Patzelt, Bernd, Dr.-Ing., 39108 Magdeburg (DE)
(74) Vertreter: KEIL & SCHAAFHAUSEN Patentanwälte

(56) Entgegenhaltungen:
- DE-C1- 19 652 100
- DE-C1- 19 943 880
- US-A- 5 582 546
- US-A1- 2003 008 716
- US-B1- 6 234 908

## Beschreibung

Die Erfindung betrifft ein teleskopierbares Antriebsgelenk zur dreh- und axialfesten, jedoch eine begrenzte Winkelbewegung zulassenden Verbindung zwischen einer ersten und einer zweiten Teilwelle einer Antriebswelle, wie einer Längswelle für Kraftfahrzeuge, wobei das Antriebsgelenk ein Gelenkinnenteil (Innennabe) und ein Gelenkaußenteil (Außennabe) sowie dazwischen vorgesehene Drehmomentübertragungsmittel, wie Kugeln, und ein diese führendes Mittel, wie einen Käfig, als weitere Gelenkteile aufweist.

Aus der DE 199 43 880 C1 ist eine Antriebswelle mit zwei Teilwellen bekannt, die über ein etwa mittig angeordnetes Antriebsgelenk miteinander verbunden sind. Der Käfig dieses Antriebsgelenks weist eine Sollbruchstelle auf, die so ausgelegt ist, dass eine auf die Teilwellen wirkende hohe Axialkraft, die bspw. bei Unfällen auftreten kann, den Käfig und damit das Antriebsgelenk zerstört. Hierdurch kann das Gelenkinnenteil und die daran befestigte erste Teilwelle in das Gelenkaußenteil und die mit diesem verbundene gegenüberliegende Teilwelle teleskopartig eindringen. Dies führt zu einer erwünschten axialen Verkürzung der Antriebsanordnung, wodurch ein seitliches Wegknicken und ein in diesem Zustand möglicherweise rotierendes Eindringen der Antriebsanordnung in den Fahrzeuginnenraum vermieden werden sollen.

Der Teleskopiervorgang wird gemäß der DE 199 43 880 C1 durch ein Zerbersten des Kugelkäfigs eingeleitet, in dessen Folge die Kugeln und Käfigfragmente in die mit dem Gelenkaußenteil verbundene Teilwelle eindringen und so den Weg für eine axiale Verschiebung des Gelenkinnenteils freigeben sollen.

Da die für die Zerstörung des Käfigs erforderliche Axialkraft in der Regel sehr groß ist, kann nicht ausgeschlossen werden, dass die Welle statt sich ineinander zu schieben ausknickt. Weiterhin ist nicht ausgeschlossen, dass sich die Käfigteile verkeilen und so eine weitgehend kraftlose Verschiebebewegung verhindert wird. Der bei diesem Stand der Technik angestrebte Erfolg ist daher ggf. nicht erreichbar, vielmehr besteht die Gefahr, dass die Antriebswelle unkontrolliert wegknickt und hierbei Insassen des Kraftfahrzeugs verletzt.

Die US 6,234,908 B1 beschreibt eine Antriebsanordnung mit einem Gleichlauffestgelenk mit einem Außenteil und einem Innenteil. Im Zwischenraum zwischen dem Außenteil und der kugeligen Außenfläche des Innenteils ist der Käfig aufgenommen, welcher eine Innenfläche mit einem hohlkugeligen Abschnitt aufweist, mit dem er auf Abschnitten, die zwischen zwei aufeinanderfolgenden Innenlaufrillen angeordnet sind, geführt wird. Um die Montage von Innenteil und Käfig zu erleichtern, weist der Käfig an der Innenfläche im Bereich der Fenster Montagenuten auf, die jeweils von den Stirnflächen des Käfigs ausgehen und im Bereich des Fensters enden.

Es ist die Aufgabe der Erfindung, ein verbessertes Antriebsgelenk zu schaffen.

Erfindungsgemäß wird dies mit einem Gelenk mit den Merkmalen des Anspruchs 1 erzielt. Vorteilhafte Ausführungsformen sind in den Unteransprüchen angegeben.

Im Sinne der vorliegenden Erfindung werden die in den ersten bzw. zweiten Kugellaufbahnpaaren angeordneten Kugeln auch als Kugeln der ersten oder zweiten Serie bzw. Reihe bezeichnet. Vorzugsweise unterscheiden sich die in den verschiedenen Kugellaufbahn- oder Laufrillenpaaren angeordneten Kugeln nicht, sondern weisen die selbe Größe und Materialbeschaffenheit auf. Es kann in einigen Anwendungsfällen jedoch vorteilhaft sein, wenn sich die in den ersten Kugellaufbahnpaaren aufgenommenen Kugeln von den in den zweiten Kugellaufbahnpaaren aufgenommenen Kugeln unterscheiden.

Insbesondere bei der oben beschriebenen Ausführung eines Gelenkes kann es vorteilhaft sein, wenn zumindest die Kontur der bspw. zweiten Innenlaufrillen und/oder die Kontur der bspw. ersten Käfigzentrierflächen der Außennabe, und/oder die Kontur der kugeligen Außenfläche des Käfigs, und/oder die Elastizität der Außennabe derart abgestimmt sind, dass eine radiale Erweiterung zumindest im Bereich der zweiten Außenlaufrillen über die radial nach außen verlagerten Kugeln der zweiten Reihe ermöglicht ist.

Weitere Merkmale, Vorteile und Anwendungsmöglichkeiten der vorliegenden Erfindung ergeben sich aus der nachfolgenden Beschreibung von Ausführungsbeispielen und anhand der Zeichnung. Dabei gehören alle beschriebenen und/oder bildlich dargestellten Merkmale für sich zum Gegenstand der vorliegenden Erfindung, auch unabhängig von ihrer Zusammenfassung in den Ansprüchen oder deren Rückbezügen. Es zeigen:
- Figur 1: eine Antriebsanordnung für ein Kraftfahrzeug mit zwei Teilwellen und einem etwa mittig angeordneten Antriebsgelenk,
- Figur 2: einen Schnitt durch ein Antriebsgelenk entlang der Linie A - A der Fig. 3,
- Figur 3: einen Schnitt entlang der Linie E - E der Fig. 2,
- Figur 4: einen Schnitt entlang der Linie C - C der Fig. 2,
- Figur 5: einen Schnitt entlang der Linie D - D der Fig. 2,
- Figur 6: einen Schnitt entlang der Linie B - B der Fig. 2,
- Figur 7: eine Ansicht aus der Richtung des Pfeiles X der Fig. 3,
- Figur 8: eine Ansicht aus der Richtung des Pfeiles Y der Fig. 3,
- Figur 9: ein erfindungsgemäßes Antriebsgelenk in einer beinahe ausgerasteten Stellung und
- Figur 10: eine Außennabe eines erfindungsgemäßen Antriebsgelenks mit quer eingeführtem Käfig.

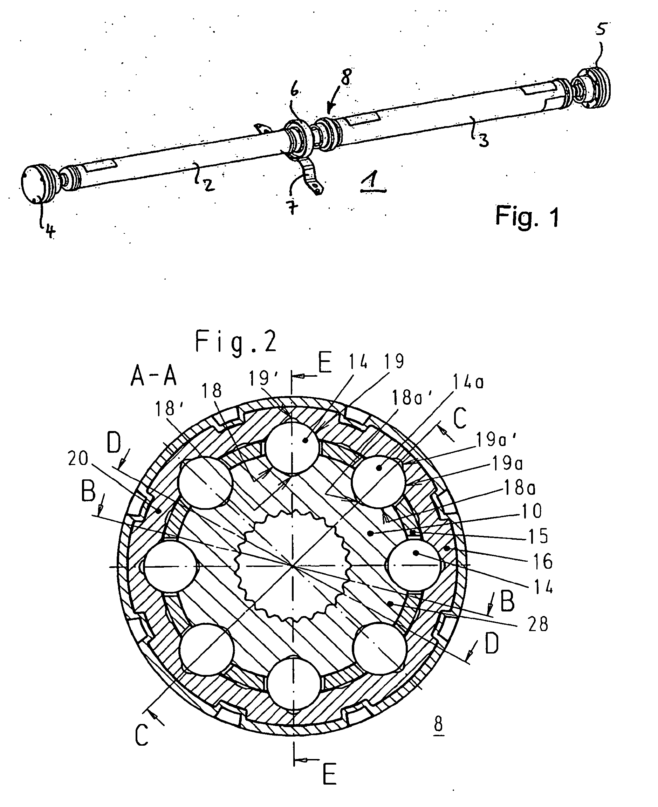

Die in Figur 1 dargestellte Antriebswelle 1 ist als Längsantriebswelle eines Kraftfahrzeuges ausgebildet und umfasst zwei Teilwellen 2 und 3, die an ihren freien Enden Anschlussstücke 4, 5 tragen. Diese Anschlussstücke sind hier als Gummigelenkscheiben ausgebildet, wenngleich an deren Stelle auch Antriebsgelenke an den Teilwellen 2 und 3 befestigt sein können, wie dies in dem eingangs genannten Stand der Technik der Fall ist, oder wie dies in der DE 102 37 172 B3 oder in der DE 100 32 853 C2 beschrieben ist.

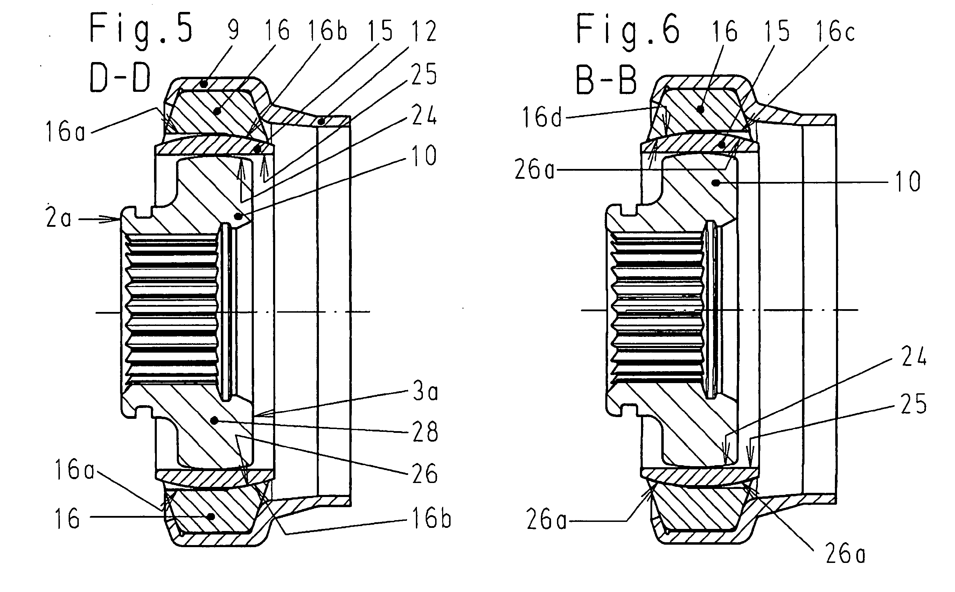

Die beiden Teilwellen 2 und 3 sind etwa in der Mitte der Antriebsanordnung 1 über ein Antriebsgelenk 8 miteinander verbunden, welches in den Figuren 2 bis 9 in verschiedenen Schnittdarstellungen abgebildet ist. Darüber hinaus zeigt Figur 1, dass die linke Teilwelle 2 über ein Zwischenlager 6 und einen daran angeordneten Halter 7 an dem Unterboden eines Kraftfahrzeuges befestigbar ist.

Damit eine solche Antriebsanordnung bei einem Fahrzeugunfall mit einer auf diese wirkenden Axialkraft nicht seitlich wegknickt und den Fahrzeugunterboden durchstößt und in den Fahrzeuginnenraum eindringt, ist das mittlere Antriebsgelenk 8 erfindungsgemäß ausrastbar ausgebildet.

Wie insbesondere aus den Schnittansichten gemäß den Figuren 2 bis 6 und 9 ersichtlich ist, die das Antriebsgelenk 8 nicht mit den Teilwellen 2 und 3 verbunden zeigen, besteht das Antriebsgelenk aus einer im Wesentlichen hohlzylindrischen Außennabe 16, in der eine Innennabe 10 in der dargestellten Position koaxial angeordnet ist. Die Innennabe 10 und die Außennabe 16 können jedoch relativ zueinander verschwenkt werden. Während die erste Teilwelle 2 mit ihrer Außensteckverzahnung in eine Innensteckverzahnung 11 der Innennabe 10 einsteckbar ist, erfolgt die Verbindung der Außennabe mit der zweiten Teilwelle 3 bei der gezeigten Ausführungsform durch eine Schweißverbindung. Hierzu ist ein mit einem Schweißflansch 12 versehenes Mitnehmergehäuse 9 vorgesehen, in dem die Außennabe 16 in einem Aufnahmebereich 17 formschlüssig eingeschlossen aufgenommen ist.

Auf der Innenseite der Außennabe 16 sind erste äußere Kugellaufbahnen 19 (erste Außenlaufrillen) für eine erste Reihe von Kugeln 14 vorgesehen. Weiter sind in der Außennabe für eine zweite Reihe von Kugeln 14a zweite äußere Kugellaufbahnen 19a (zweite Außenlaufrillen) ausgebildet, wobei zwischen den ersten und zweiten Kugellaufbahnen Stege 20 vorgesehen sind.

Auf der Außenseite der Innennabe 10 sind erste innere Kugellaufbahnen 18 (erste Innenlaufrillen) für die erste Reihe von Kugeln 14 und zweite innere Kugellaufbahnen 18a (zweite Innenlaufrillen) für die zweite Reihe von Kugeln 14a vorgesehen, wobei auch zwischen den ersten und zweiten Kugellaufbahnen Stege 28 gebildet sind.

Der Bahngrund der Kugellaufbahnen 18, 18a, 19 und 19a ist mit den Bezugsziffern 18', 19', 18a' bzw. 19a' bezeichnet. Das antriebsseitige Ende des Antriebsgelenks 8 ist in den Figuren beispielhaft mit 2a gekennzeichnet, während das abtriebsseitige Ende mit Bezugsziffer 3a gekennzeichnet ist. Die Bezeichnungen antriebsseitig und abtriebsseitig werden bei dieser Erfindung allein zur Unterscheidung der beiden Enden des Antriebsgelenks 8 gebraucht. Selbstverständlich können das antriebsseitige Ende 2a und das abtriebsseitige Ende 3a entweder mit einer Antriebs- oder einer Abtriebswelle verbunden sein.

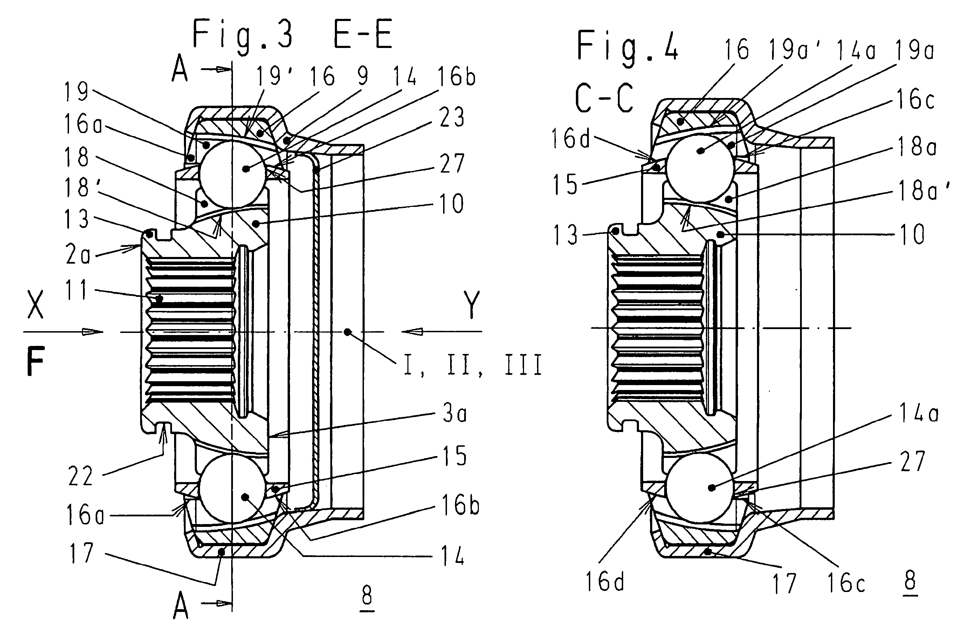

Die Innennabe 10 weist eine Innennabenachse I und eine Außenfläche 24 auf. Wie insbesondere aus den Figuren 3, 7, 8 ersichtlich ist, sind die ersten Innenlaufrillen 18 und die zweiten Innenlaufrillen 18a um die Innennabenachse I abwechselnd verteilt angeordnet, wobei die ersten Innenlaufrillen 18 vom antriebsseitigen Ende 2a ausgehend in Richtung auf das abtriebsseitige Ende 3a verlaufen, und die Innenlaufrillen und ihr Bahngrund 18' sich dabei von der Innennabenachse I entfernen; wie insbesondere aus den Figuren 4, 7 und 8 ersichtlich ist, verlaufen die zweiten Innenlaufrillen 18a vom abtriebsseitigen Ende 3a aus in Richtung auf das antriebsseitige Ende 2a, wobei sich diese zweiten Innenlaufrillen und ihr Bahngrund 18a' dabei von der Innennabenachse I entfernen.

Die Außennabe 16 besitzt eine Außennabenachse II und eine Innenkontur, in der die ersten Außenlaufrillen bzw. -bahnen 19 für die erste Reihe von Kugeln 14 und die zweiten Außenlaufrillen bzw. -bahnen 19a für die zweite Reihe von Kugeln 14a um die Außennabenachse II abwechselnd verteilt angeordnet sind. Hierbei liegen jeweils die ersten Innenlaufrillen 18 den ersten Außenlaufrillen 19 und jeweils die zweiten Innenlaufrillen 18a den zweiten Außenlaufrillen 19a gegenüber und bilden mit diesen jeweils ein Paar. Die ersten Außenlaufrillen 19 verlaufen dabei von dem antriebsseitigen Ende 2a ausgehend in Richtung auf das abtriebsseitige Ende 3a, wobei die Außenlaufrillen 19 und ihr Bahngrund 19' sich dabei der Außennabenachse II annähern. Entsprechend verlaufen die zweiten Außenlaufrillen 19a von dem abtriebsseitigen Ende 3a ausgehend in Richtung auf das antriebsseitige Ende 2a, wobei die zweiten Außenlaufrillen 19a mit ihrem Bahngrund 19a' sich dabei, wie in den Figuren 3 und 4 dargestellt, der Außennabenachse II annähern.

In einem ringförmigen Käfig 15 mit einer wenigstens abschnittsweise kugeligen Außenfläche 26, der zwischen der Innennabe 10 und der Außennabe 16 angeordnet ist, sind entsprechend der Anzahl der Kugeln 14, 14a und der Laufrillen-Paare 18 und 19 bzw. 18a und 19a radiale Fenster 27 vorgesehen, in denen die Kugeln 14, 14a geführt sind. Der Käfig 15 ist in der Außennabe 16 über seine Außenfläche 26 geführt und zentriert. Hierzu weist der ringförmige Käfig 15 auf seiner Außenfläche 26 zwei Zentrierbereiche 26a auf.

Wie oben erläutert, sind in der Innenfläche der Außennabe 16 zwischen den Außenlaufrillen für die Kugeln Stege 20 vorgesehen. Diese Stege weisen, wie in den Figuren 3, 5, 7, 8 und 10 dargestellt, beidseits der Außenlaufrillen 19 vorgesehene Einführungskonturen 16a zur axialen Einführung des Käfigs 15 in der Außennabe 16 auf. Die Einführungskonturen 16a verlaufen von dem antriebsseitigen Ende 2a aus mit einem Durchmesser, der zumindest annähernd dem Außendurchmesser des Käfigs 15 entspricht, und gehen nach zumindest annähernd der halben axialen Länge der Außennabe in erste Käfigzentrierflächen 16b über, die in Richtung auf die Käfigachse III zu geneigt sind. Die ersten Käfigzentrierflächen 16b sind dabei den kugelförmig ausgebildeten Zentrierbereichen 26a des Käfigs 15 entsprechend ballig angeglichen.

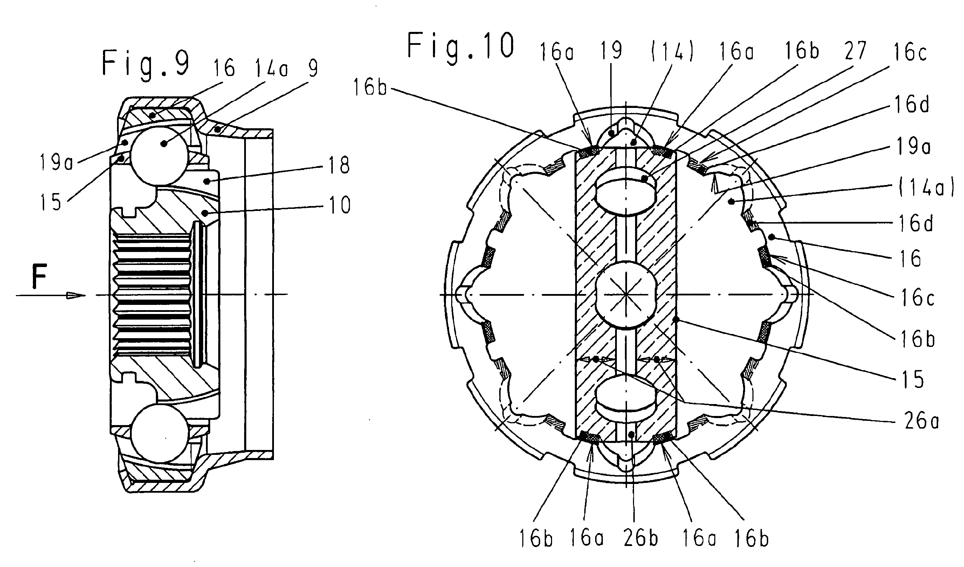

Der Käfig 15 kann, wie in Figur 10 gezeigt, ohne Kugeln und ohne Innennabe in Richtung des Pfeils X über die beidseits von jeweils zwei einander diametral gegenüber liegenden ersten Außenlaufrillen 19 angeordneten Einführungskonturen 16a erfolgen, wobei die Rotationsebene des Käfigs in eine Position rechtwinklig zur Rotationsebene der Außennabe gebracht ist, d.h. die Außennabenachse II und die Käfigachse III stehen senkrecht aufeinander, bis der Käfig 15 mit seinen Zentrierbereichen 26a an die ersten Käfigzentrierflächen 16b anstößt. Danach kann der Käfig zur Montage der Kugeln und der Innennabe verschwenkt werden, wie dies in der DE 102 09 933 A1 näher beschrieben ist.

Wie in den Figuren 4, 6, 7, 8 und 10 dargestellt, sind die Außennabe bzw. deren Stege in der gezeigten Ausführungsform derart ausgebildet, dass beidseits der zweiten Außenlaufrillen 19a weitere Einführungskonturen 16c vorgesehen sind, um den Käfig 15 auch von dem abtriebsseitigen Ende 3a her, also in Richtung des Pfeils Y, einführen zu können. Hierfür verlaufen die Einführungskonturen 16c auch auf der Abtriebsseite 3a mit einem Durchmesser, der zumindest annähernd dem Außendurchmesser des Käfigs 15 entspricht und gehen nach zumindest annähernd der halben axialen Länge des Käfigs in die zweiten Käfigzentrierflächen 16d an der Außennabe für den Käfig über. Von dort verlaufen sie in Richtung auf die Käfigachse III geneigt. Die zweiten Käfigzentrierflächen 16d sind dabei, ebenso wie die ersten Käfigzentrierflächen, den kugelförmig ausgebildeten Zentrierbereichen 26a des Käfigs entsprechend ballig angeglichen.

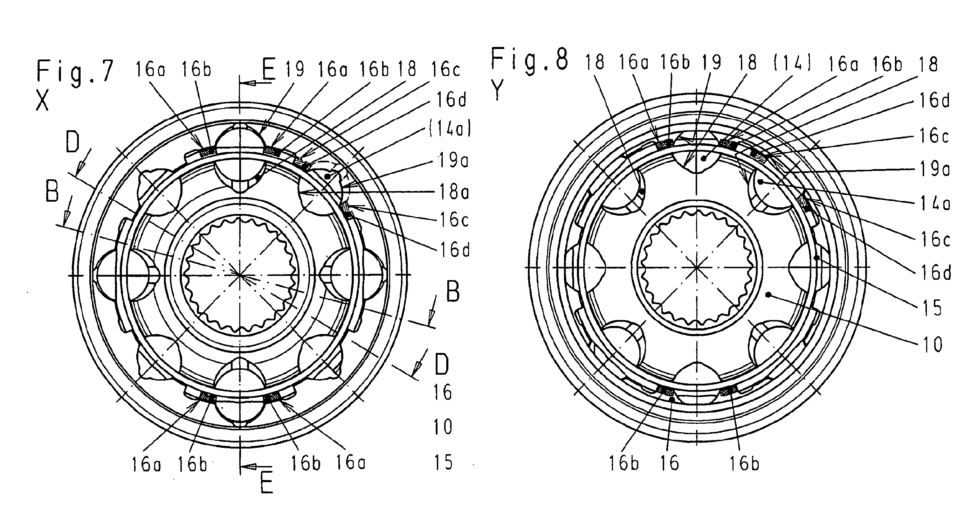

In den Figuren 7, 8 und 10 sind die Käfigzentrierflächen 16b, die in der Draufsicht vom Betrachter tatsächlich sichtbar sind, sich jedoch auf der vom Betrachter abgewandten Seite der Außennabe befinden, doppelt schraffiert dargestellt. Die einfach schraffierten Käfigzentrierflächen 16d sind vom Betrachter nicht sichtbar, sie sind dem Betrachter jedoch zugewandt.

Zwischen den beiden Anlageflächen bzw. Zentrierbereichen 26a des Käfigs 15 ist zweckmäßigerweise wenigstens eine bei der Ausführungsform nach Figur 10 als Abflachung 26b ausgebildete Umfangskontur eingebracht, die in besonders vorteilhafter Weise als Schmiermittelnut fungieren kann.

Das Einführen des Käfigs 15 kann auch in Richtung des Pfeils Y über die beidseits von jeweils zwei einander diametral gegenüber liegenden zweiten Außenlaufrillen 19a angeordneten Einführkonturen 16c erfolgen, wobei die Rotationsebene des Käfigs in einer zu der in Figur 10 gezeigten Position um 45° versetzten Position quer zur Rotationsebene der Außennabe gebracht ist, d.h. die Außennabenachse II und die Käfigachse III stehen senkrecht aufeinander.

Die oben beschriebene symmetrische Ausführung der Außennabe ermöglicht in besonders vorteilhafter Weise die Herstellung der Außennabe als spanlos umgeformtes Teil. Die Konturen des Werkzeuges, welche die Käfigführungsflächen und in axialer Richtung die Einführungskonturen von beiden Seiten in die Außennabe eindringend formen, lassen sich so aus der Außennabe herausziehen. Durch die hinterschnittfreie Gestaltung der Außennabe ist es erst möglich, diese spanlos herzustellen.

Um nun zu vermeiden, dass bei Auftreten von hohen axialen Kräften von einer Teilwelle 2 auf die andere Teilwelle 3 in Richtung des Pfeils F, die Antriebswelle 1 im Bereich des Gelenkes 8 ausknickt, und womöglich rotierend in den Fahrgastinnenraum eindringt, was insbesondere bei Frontalzusammenstößen oder Auffahrunfällen vorkommen kann, ist das Gelenk 8 ausrastbar ausgebildet. Hierzu ist bei dem dargestellten Ausführungsbeispiel der Gelenkaußenring, d.h. die Außennabe und/oder das Mitnehmergehäuse, wie in den Figuren 4 und 9 dargestellt, elastisch deformierbar ausgebildet. Tritt nun eine hohe axiale Kraft auf die Teilwellen 2 und 3 auf, so dass durch diese Kraft der Abstand zwischen den Anschlussstücken 4 und 5 verkürzt wird, kann das Gelenkinnenteil bzw. die Innennabe 10 gegenüber dem Gelenkaußenteil bzw. der Außennabe 16 axial verschoben werden. Dabei werden die Kugeln 14a der zweiten Laufbahnpaare durch die axiale Verschiebung der zweiten inneren Kugellaufbahnen 18a mit dem Gelenkinnenteil radial geringfügig nach außen gedrückt, so dass sich die Außennabe zumindest lokal aufweitet. In der in Figur 9 gezeigten Position sind dabei die Kugeln 14 in den ersten Laufbahnpaaren, wie dies in Figur 3 erkennbar ist, radial nach innen freigegeben, und zwar um einen größeren Betrag als der Betrag, der sich aus dem radialen Auswandern der Kugeln 14a ergibt. Das Ausrasten wird dabei auch dadurch erleichtert, dass die Außennabe in der Position der Innennabe entsprechend Figur 9 kurzfristig annähernd eine Polygon-Form annimmt, die durch die entsprechende Position der vier Kugeln 14a bestimmt ist. Bei einer über die in Figur 9 gezeigte Position weiteren axialen Verschiebung der Innennabe in die Außennabe springen die Kugeln 14a von den inneren Kugellaufbahnen 18a radial nach Innen ab. Hierdurch ist das Gelenk ausgerastet, so dass die Innennabe 10 mitsamt der Teilwelle 2 weiter in die Teilwelle 3 axial einfahren kann. Dieses Teleskopieren der Teilwelle 2 in die Teilwelle 3 kann entweder ungehindert erfolgen oder, was besonders vorteilhaft sein kann, definiert gedämpft, indem in der Teilwelle 3 eine Axial-Dämpfungseinrichtung vorgesehen ist, die auch progressiv wirksam ausgebildet sein kann.

Unter Elastizität der Außennabe wird auch die Elastizität der die Außennabe unmittelbar umgebenden, d.h. bei der Verformung beeinträchtigten Bauteile, wie z.B. des Aufnahmebereiches 17 des Mitnehmergehäuses 3, verstanden. Selbstverständlich kann im Rahmen der Erfindung die Außennabe 16 einstückig mit dem Mitnehmergehäuse 9 ausgebildet sein.

Während des Ausrastens des Antriebsgelenkes infolge der axialen Verschiebung der Innnabe relativ zu der Außennabe stützt sich der dem abtriebsseitigen Ende 3a zugewandte ballige Zentrierbereich (Lagerfläche) 26a des Käfigs 15 an den Käfigzentrierflächen 16b ab, so dass der Käfig 15 und die von ihm gehaltenen Kugeln 14a auch in der in Figur 9 gezeigten Position von Innennabe 10 zu Außennabe 16 relativ in der ursprünglichen Position verbleiben, bis dann bei einer weiteren axialen Verschiebung die zweiten Kugellaufbahnen 18a die Kugeln 14a radial nicht mehr positionieren. Der Käfig 15 ist zweckmäßigerweise derart stabil ausgestaltet, dass dieser die oben beschriebene Situation zerstörungsfrei übersteht.

Erfindungsgemäß kann die Innennabe 10 alternativ oder zusätzlich zu der oben beschriebenen elastischen Aufweitung der Außennabe derart elastisch ausgestaltet werden, dass die Kugeln 14a durch eine Deformation der Innennabe zumindest im Bereich der zweiten Kugellaufbahnen 18a freigegeben werden und somit das Antriebsgelenk ausrastet. Dies kann z.B. durch Einbringen von in Achsrichtung verlaufenden Ausnehmungen in einem radial innerhalb der Kugeln liegenden Bereich in der Innennabe, zumindest von der Antriebsseite her und/oder in einem radial außerhalb der Kugeln liegenden Bereich in der Außennabe, zumindest im Bereich der Abtriebsseite, erfolgen.

## Patentansprüche

1. Antriebsgelenk, das ein antriebsseitiges Ende und ein abtriebsseitiges Ende aufweist, mit
- einer Innennabe (10), die eine Innennabenachse (I) und eine Außenkontur aufweist, in der erste Innenlaufrillen (18) und zweite Innenlaufrillen (18a) um die Innennabenachse (I) abwechselnd verteilt angeordnet sind, wobei die ersten lnnenlaufrillen (18) von dem antriebsseitigen Ende (2a) ausgehend in Richtung auf das abtriebsseitige Ende (3a) verlaufen und sich ihr Bahngrund dabei von der Innennabenachse (I) entfernt und wobei die zweiten Innenlaufrillen (18a) von dem abtriebsseitigen Ende (3a) ausgehend in Richtung auf das antriebsseitige Ende (2a) verlaufen und sich ihr Bahngrund dabei von der lnnennabenachse entfernt,
- einer Außennabe (16), die eine Außennabenachse und eine Innenkontur aufweist, in der erste Außenlaufrillen (19) und zweite Außenlaufrillen (19a) um die Außennabenachse (II) abwechselnd verteilt angeordnet sind und jeweils die ersten Innenlaufrillen (18) ersten Außenlaufrillen (19) und die zweiten Innenlaufrillen (18a) zweiten Außenlaufrillen (19a) gegenüberliegen und mit diesen jeweils ein Paar bilden, wobei die ersten Außenlaufrillen (19) von dem antriebsseitigen Ende (2a) ausgehend in Richtung auf das abtriebsseitige Ende (3a) verlaufen und sich ihr Bahngrund dabei der Außennabenachse (II) annähert und wobei die zweiten Außenlaufrillen (19a) von dem abtriebsseltigen Ende (3a) ausgehend in Richtung auf das antriebsseitige Ende (2a) verlaufen und sich ihr Bahngrund dabei der Außennabenachse (II) annähert,
- einem ringförmigen Käfig (15) mit einer kugeligen Außenfläche (26), der zwischen der Innennabe (10) und der Außennabe (16) angeordnet ist und entsprechend der Anzahl der Laufrillenpaare (18, 19; 18a, 19a) radiale Fenster (27) aufweist, in denen in die Laufrillen eingreifende Kugeln (15) geführt sind, und wobei der Käfig (15) in der Außennabe, (16) zentriert geführt ist,
- in der Innenfläche der Außennabe (16) vorgesehenen ersten Einführungskonturen (16a), die beidseits der ersten Außenlaufrillen (19) angeordnet sind und von dem antriebsseitigen Ende (2a) mit einem Durchmesser, der zumindest annähernd dem Außendurchmesser des Käfigs (15) entspricht, zumindest annähernd nach der halben axialen Länge der Außennabe (16) in erste Käfigzentrierflächen (16b) übergehen, welche in Richtung auf die Käfigachse (III) geneigt verlaufen und entsprechend der kugelförmig ausgebildeten Anlageflächen des Käfigs (15) ballig ausgebildet sind.
- in der Innenfläche der Außennabe (16) vorgesehenen zweiten Einführungskonturen (16c), die beidseits der zweiten Außenlaufrillen (19a) angeordnet sind und von dem abtriebsseitigen Ende (3a) mit einem Durchmesser, der zumindest annähemd dem Außendurchmesser des Käfigs (15) entspricht, zumindest annähernd nach der halben axialen Länge der Außennabe (16) in zweite Käfigzentrierflächen (16d) übergehen, welche in Richtung auf die Käfigachse (III) geneigt verlaufen und entsprechend der kugelförmig ausgebildeten Anlageflächen des Käfigs (15) ballig ausgebildet sind,
wobei die Zentrierung des Käfigs ausschließlich in der Außennabe (16) und die Zentrierung der Innennabe (10) zur Außennabe (16) ausschließlich über die Kugeln (15) erfolgt.

2. Antriebsgelenk nach Anspruch 1, zur Verbindung zwischen einer ersten (2) und einer zweiten Teilwelle (3) einer Antriebswelle, wie einer Längswelle für Kraftfahrzeuge, welches eine Innennabe als Gelenkinnenteil und eine Außennabe als Gelenkaußenteil sowie zwischen diesen vorgesehene Drehmomentübertragungsmittel als weitere Gelenkteile aufweist, **dadurch gekennzeichnet, dass** das Gelenk derart ausgebildet ist, dass bei Überschreiten einer bestimmten Axialkraft in Richtung einer Teilwelle auf die andere Teilwelle die Gelenkteile auseinander ausrasten.

3. Antriebsgelenk nach Anspruch 1 oder 2, **dadurch gekennzeichnet, dass** die Außennabe (16) als Deformationsetement ausgebildet ist.

4. Antriebsgelenk nach einem der Ansprüche 1 bis 3, **dadurch gekennzeichnet, dass** die Außennabe (16) derart ausgebildet ist, dass diese bei Überschreiten einer vorgegebenen Axialkraft auf das Antriebsgelenk unter plastischer und/oder elastischer Verformung ein Ausrasten der Innennabe (10) aus der Außennabe (16) ermöglicht.

5. Antriebsgelenk nach einem der Ansprüche 1 bis 4, **dadurch gekennzeichnet, dass** in der Innennabe (10) und der Außennabe (16) mehrere einander zugeordnete Laufbahnen vorgesehen sind, in denen Kugeln (14, 14a) zur Drehmomentübertragung aufgenommen sind, und dass eine Serie von Laufbahnen der Innennabe schräg zu der Achse der Innennabe verläuft und derart ausgebildet ist, dass die Laufbahnen der Innennabe beim Ausrasten von Innennabe (10) und Außennabe (16) durch die Kugeln (14, 14a) zumindest an ihrem antriebsseitigen Ende (2a) plastisch und/oder elastisch verformbar sind.

6. Antriebsgelenk nach wenigstens einem der vorherigen Ansprüche, **dadurch gekennzeichnet, dass** die Innennabe (10) eine koaxial zu der Achse der Innennabe ausgerichtete Innensteckverzahnung zur Aufnahme einer Außensteckverzahnung einer der Teilwellen aufweist.

7. Antriebsgelenk nach wenigstens einem der vorherigen Ansprüche, **dadurch gekennzeichnet, dass** die Innennabe (10) an ihrem antriebsseitigen Ende eine Ringnut als Montagehilfe aufweist.

8. Antriebsgelenk nach wenigstens einem der vorherigen Ansprüche, **dadurch gekennzeichnet, dass** das Gelenk an seinem antriebsseitigen (2a) und/oder abtriebsseitigen (23a) Ende einen Schweißflansch zur Befestigung an wenigstens einer der Teilwellen aufweist.

9. Antriebsgelenk nach Anspruch 8, **dadurch gekennzeichnet, dass** der Außennabe (16) ein Mitnehmergehäuse mit einem Aufnahmebereich für die Außennabe (16) zugeordnet ist, und dass an der Innenseite des Mitnehmergehäuses zwischen dem Aufnahmebereich für die Außennabe und dem Schweißflansch ein Deckel eingeklemmt ist.

10. Antriebsgelenk, nach einem der Ansprüche 1 bis 9, **dadurch gekennzeichnet, dass** zumindest die Kontur der zweiten inneren Kugellaufbahn, und/oder die Kontur der ersten Käfigzentrierfläche (16b) der Außennabe, und/oder die Kontur der kugeligen Außenfläche des Käfigs (15), und/oder die Elastizität der Außennabe (16) derart abgestimmt sind, dass eine radiale Erweiterung zumindest im Bereich der zweiten Außenlaufrillen über die radial nach außen verlagerten Kugeln der zweiten Reihe ermöglicht ist.

## Claims

1. Drive joint which has a drive-side end and an output-side end, with
- an inner hub (10) which has an inner hub axis (I) and an outer contour in which first inner running grooves (18) and second inner running grooves (18a) are arranged, distributed alternately about the inner hub axis (I), the first inner running grooves (18) running in the direction of the output-side end (3a), proceeding from the drive-side end (2a), and at the same time their groove root moving away from the inner hub axis (I), and the second inner running grooves (18a) running in the direction of the drive-side end (2a), proceeding from the output-side end (3a) and at the same time their groove root moving away from the inner hub axis,
- an outer hub (16) which has an outer hub axis and an inner contour, in which first outer running grooves (19) and second outer running grooves (19a) are arranged, distributed alternately about the outer hub axis (II), and respectively the first inner running grooves (18) oppose first outer running grooves (19) and the second inner running grooves (18a) oppose second outer running grooves (19a), and respectively form a pair therewith, the first outer running grooves (19) running in the direction of the output-side end (3a), proceeding from the drive-side end (2a), and at the same time their groove root approaching the outer hub axis (II) and the second outer running grooves (19a) running in the direction of the drive-side end (2a), proceeding from the output-side end (3a), and at the same time their groove root approaching the outer hub axis (II),
- an annular cage (15) having a spherical outer surface (26), which is arranged between the inner hub (10) and the outer hub (16) and has radial apertures (27) corresponding to the number of pairs of running grooves (18, 19; 18a, 19a), in which balls (15) which engage in the running grooves are guided and the cage (15) being guided to be centred in the outer hub (16),
- first introduction contours (16a) provided in the inner surface of the outer hub (16) which are arranged on both sides of the first outer running grooves (19) and, from the drive-side end (2a), at a diameter which at least approximately corresponds to the external diameter of the cage (15), at least approximately after half the axial length of the outer hub (16), merge with first cage centring surfaces (16b) which run at an incline in the direction of the cage axis (III), and are configured to be ball-shaped, in accordance with the spherical contact surfaces of the cage (15),
- second introduction contours (16c) provided in the inner surface of the outer hub (16), which are arranged on both sides of the second outer running grooves (19a) and, from the output-side end (3a), at a diameter which at least approximately corresponds to the external diameter of the cage (15), at least approximately after half the axial length of the outer hub (16), merge with second cage centring surfaces (16d) which run at an incline in the direction of the cage axis (III), and are configured to be ball-shaped, in accordance with the spherical contact surfaces of the cage (15),
the centring of the cage taking place exclusively in the outer hub (16) and the centring of the inner hub (10) relative to the outer hub (16) taking place exclusively via the balls (15).

2. Drive joint according to claim 1, for connection between a first (2) and a second shaft sub-section (3) of a drive shaft, such as a longitudinal shaft for motor vehicles, which drive joint has an inner hub as an inner joint part and an outer hub as an outer joint part, as well as torque transfer means provided therebetween as additional joint parts, **characterized in that** the joint is configured in such a manner that when a certain axial force in the direction of one shaft sub-section towards the other shaft sub-section is exceeded, the joint parts disengage from one another.

3. Drive joint according to claim 1 or 2, **characterized in that** the outer hub (16) is configured as a deformation element.

4. Drive joint according to one of claims 1 to 3, **characterized in that** the outer hub (16) is configured in such a manner that if a predetermined axial force on the drive joint is exceeded, said outer hub (16) enables disengagement of the inner hub (10) from the outer hub (16) by plastic and/or elastic deformation.

5. Drive joint according to one of claims 1 to 4, **characterized in that** a plurality of raceways associated with one another are provided in the inner hub (10) and the outer hub (16) in which balls (14, 14a) are accommodated to transfer torque, and that a series of raceways of the inner hub runs obliquely to the axis of the inner hub, and is configured in such a manner that the raceways of the inner hub may be plastically and/or elastically deformed when the inner hub (10) and the outer hub (16) disengage, by means of the balls (14, 14a) at least at their drive-side end (2a).

6. Drive joint according to at least one of the preceding claims, **characterized in that** the inner hub (10) has an inner insertion gearing aligned coaxially to the axis of the inner hub, for accommodating an outer insertion gearing of one of the shaft sub-sections.

7. Drive joint according to at least one of the preceding claims, **characterized in that** the inner hub (10) has an annular groove at its drive-side end as an assembly aid.

8. Drive joint according to at least one of the preceding claims, **characterized in that** the joint has a weld flange for fastening to at least one of the shaft sub-sections at its drive-side end (2a) and/or output-side end (23a).

9. Drive joint according to claim 8, **characterized in that** a carrier housing having a receiving region for the outer hub (16) is associated with the outer hub (16) and that a lid is clamped between the receiving region for the outer hub and the weld flange, on the inner side of the carrier housing.

10. Drive joint according to one of Claims 1 to 9, **characterized in that** at least the contour of the second inner ball raceway and/or the contour of the first cage centring surface (16b) of the outer hub, and/or the contour of the spherical outer surface of the cage (15) and/or the elasticity of the outer hub (16) are coordinated with one another in such a way that a radial widening is made possible at least in the region of the second outer running grooves, via the balls of the second row which are displaced radially outwards.

## Revendications

1. Joint de transmission articulé, qui présente une extrémité du côté d'entraînement et une extrémité du côté de sortie, comportant
- un bossage intérieur (10), qui présente un axe de bossage intérieur (I) et un contour extérieur, dans lequel des premiers sillons de roulement intérieurs (18) et des deuxièmes sillons de roulement intérieurs (18a) sont répartis en alternance autour de l'axe de bossage intérieur (I), dans lequel les premiers sillons de roulement (18) s'étendent en partant de l'extrémité du côté d'entraînement (2a) dans la direction de l'extrémité du côté de sortie (3a) et leur fond de voie s'éloigne ainsi de l'axe de bossage intérieur (I) et dans lequel les deuxièmes sillons de roulement intérieurs (18a) s'étendent en partant de l'extrémité du côté de sortie (3a) dans la direction de l'extrémité du côté d'entraînement (2a) et leur fond de voie s'éloigne ainsi de l'axe de bossage intérieur,
- un bossage extérieur (16), qui présente un axe de bossage extérieur et un contour intérieur, dans lequel des premiers sillons de roulement extérieurs (19) et des deuxièmes sillons de roulement extérieurs (19a) sont répartis en alternance autour de l'axe de bossage extérieur (II) et respectivement les premiers sillons de roulement intérieurs (18) sont situés en vis-à-vis des premiers sillons de roulement extérieurs (19) et les deuxièmes sillons de roulement intérieurs (18a) sont situés en vis-à-vis des deuxièmes sillons de roulement extérieurs (19a) et forment respectivement une paire avec ceux-ci, dans lequel les premiers sillons de roulement extérieurs (19) s'étendent en partant de l'extrémité du côté d'entraînement (2a) dans la direction de l'extrémité du côté de sortie (3a) et leur fond de voie se rapproche ainsi de l'axe de bossage extérieur (II) et dans lequel les deuxièmes sillons de roulement extérieur (19a) s'étendent en partant de l'extrémité du côté de sortie (3a) dans la direction de l'extrémité du côté d'entraînement (2a) et leur fond de voie se rapproche ainsi de l'axe de bossage extérieur (II),
- une cage annulaire (15) avec une surface extérieure sphérique (26), qui est disposée entre le bossage intérieur (10) et le bossage extérieur (16) et présente des fenêtres radiales (27) correspondant au nombre des paires de sillons de roulement (18, 19 ; 18a, 19a), fenêtres dans lesquelles sont guidées des billes (15) s'engageant dans les sillons de roulement et dans lequel la cage (15) est guidée de manière centrée dans le bossage extérieur (16),
- des premiers contours d'insertion (16a) prévus dans la surface intérieure du bossage extérieur (16), qui sont disposés des deux côtés des premiers sillons de roulement (19) et aboutissent depuis l'extrémité du côté d'entraînement (2a) avec un diamètre, qui correspond au moins approximativement au diamètre extérieur de la cage (15), au moins approximativement après la demie longueur axiale du bossage extérieur (16) dans des premières surfaces de centrage de cage (16b), qui s'étendent en inclinaison dans la direction de l'axe de cage (III) et ont une configuration bombée correspondant aux surfaces de positionnement sphériques de la cage (15),
- des deuxièmes contours d'insertion (16c) prévus dans la surface intérieure du bossage extérieur (16), qui sont disposés des deux côtés des deuxièmes sillons de roulement extérieurs (19a) et aboutissent depuis l'extrémité du côté de sortie (3a) avec un diamètre, qui correspond au moins approximativement au diamètre extérieur de la cage (15), au moins approximativement après la demie longueur axiale du bossage extérieur (16) dans des deuxièmes surfaces de centrage de cage (16d), qui s'étendent en inclinaison dans la direction de l'axe de cage (III) et ont une configuration bombée correspondant aux surfaces de positionnement sphériques de la cage (15),
dans lequel le centrage de la cage a lieu exclusivement dans le bossage extérieur (16) et le centrage du bossage intérieur (10) par rapport au bossage extérieur (16) a lieu exclusivement par l'intermédiaire des billes (15).

2. Joint de transmission articulé selon la revendication 1, pour la liaison entre un premier (2) et un deuxième arbre partiel (3) d'un arbre d'entraînement, comme un arbre longitudinal pour véhicules automobiles, qui présente un bossage intérieur comme partiel intérieure articulée et un bossage extérieur comme partie extérieure articulée ainsi qu'un moyen de transmission de couple de rotation prévu entre ceux-ci comme autre partie articulée, **caractérisé en ce que** le joint articulé est réalisé de telle sorte que quand une certaine force axiale est dépassée dans la direction d'un arbre partiel sur l'autre arbre partiel, les parties articulées se déboîtent l'une de l'autre.

3. Joint de transmission articulé selon la revendication 1 ou 2, **caractérisé en ce que** le bossage extérieur (16) est réalisé comme un élément à déformation.

4. Joint de transmission articulé selon une des revendications 1 à 3, **caractérisé en ce que** le bossage extérieur (16) est réalisé de telle sorte que celui-ci permette, lors du dépassement d'une force axiale prescrite sur le joint de transmission articulé sous une déformation plastique et/ou élastique, un déboîtement du bossage intérieur (10) hors du bossage extérieur (16).

5. Joint de transmission articulé selon une des revendications 1 à 4, **caractérisé en ce que** dans le bossage intérieur (10) et le bossage extérieur (16) sont prévues plusieurs voies de roulement coordonnées les unes aux autres, dans lesquelles des billes (14, 14a) pour la transmission du couple de rotation sont renfermées, et **en ce que** une série de voies de roulement du bossage intérieur s'étend en biais de l'axe de bossage intérieur et est réalisé de telle sorte que les voies de roulement du bossage intérieur soient déformables de manière plastique et/ou élastique lors du déboîtement du bossage intérieur (10) et du bossage extérieur (16) par l'intermédiaire des billes (14, 14a) au moins sur leur extrémité (2a) du côté d'entraînement.

6. Joint de transmission articulé selon au moins une des revendications précédentes, **caractérisé en ce que** le bossage intérieur (10) présente une cannelure intérieure alignée coaxialement par rapport à l'axe du bossage intérieur pour recevoir une cannelure extérieure d'un des arbres partiels.

7. Joint de transmission articulé selon au moins une des revendications précédentes, **caractérisé en ce que** le bossage intérieur (10) présente sur son extrémité du côté d'entraînement une rainure annulaire comme auxiliaire de montage.

8. Joint de transmission articulé selon au moins une des revendications précédentes, **caractérisé en ce que** le joint articulé présente sur son extrémité du côté d'entraînement (2a) et/ou du côté de sortie (23a) une bride soudée à des fins de fixation sur au moins un des arbres partiels.

9. Joint de transmission articulé selon la revendication 8, **caractérisé en ce que** le bossage extérieur (16) est coordonné à un logement de taquet d'entraînement comportant une zone de réception du bossage extérieur (16), et **en ce que** sur le côté intérieure du logement de taquet d'entraînement un couvercle est pincé entre la zone de réception du bossage extérieur et la bride soudée.

10. Joint de transmission articulé selon une des revendications 1 à 9, **caractérisé en ce que** au moins le contour de la deuxième voie de roulement de bille intérieure et/ou le contour de la première surface de centrage de cage (16b) du bossage extérieur, et/ou le contour de la surface sphérique de la cage (15) et/ou l'élasticité du bossage extérieur (16) sont harmonisés de telle sorte qu'un élargissement radial au moins au niveau des deuxièmes sillons de roulement extérieurs soit possible par l'intermédiaire des billes de la deuxième rangée positionnées radialement vers l'extérieur.
